(19) Europäisches Patentamt
European Patent Office
Office européen des brevets

(11) **EP 2 447 467 A1**

(12) **DEMANDE DE BREVET EUROPEEN**

(43) Date de publication:
**02.05.2012 Bulletin 2012/18**

(51) Int Cl.:
***E21B 43/00*** (2006.01)   ***E21B 49/00*** (2006.01)
***G01V 1/28*** (2006.01)

(21) Numéro de dépôt: **11290122.8**

(22) Date de dépôt: **11.03.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **28.10.2010 FR 1004246**

(71) Demandeur: **IFP Energies nouvelles**
**92852 Rueil-Malmaison Cedex (FR)**

(72) Inventeurs:
• **Derfoul, Ratiba**
  **91750 Chevannes (FR)**
• **Tillier, Elodie**
  **92500 Rueil-Malmaison (FR)**
• **De Veiga, Sébastien**
  **75005 Paris (FR)**

(54) **Procédé d'exploitation d'un gisement pétrolier à partir d'un calage d'historique des données de production et de données sismiques**

(57)    On acquiert en cours d'exploitation du gisement des données de production et des données sismiques. On construit une première image, dite image de référence, d'un attribut sismique à partir des données sismiques. Puis, on simule des réponses en production à partir du modèle de réservoir au moyen d'un simulateur d'écoulement. On simule aussi une image correspondant à l'attribut sismique considéré à partir du modèle de réservoir. Puis, on construit une carte de dissimilarités locales à partir de l'image d'attribut sismique de référence et de l'image d'attribut sismique simulé. On modifie le modèle de réservoir de façon à minimiser la différence entre les données de production mesurées et les réponses en production correspondantes, et de façon à minimiser les dissimilarités locales. Enfin, on utilise ce modèle calé pour déterminer un schéma optimal d'exploitation, et on exploite le gisement selon ce schéma d'exploitation.

Fig. 1

**EP 2 447 467 A1**

**Description**

La présente invention concerne le domaine technique de l'industrie pétrolière, et plus particulièrement l'exploitation de réservoirs souterrains, tels que des réservoirs pétroliers ou des sites de stockage de gaz.

En particulier, l'invention permet de modifier une représentation du réservoir, appelée modèle de réservoir, pour la rendre cohérente avec les différentes données collectées sur le terrain.

L'optimisation et l'exploitation des gisements pétroliers reposent sur une description aussi précise que possible de la structure, des propriétés pétrophysiques, des propriétés des fluides, etc., du gisement étudié. Pour ce faire, les spécialistes utilisent un outil qui permet de rendre compte de ces aspects de façon approchée : le modèle de réservoir. Un tel modèle constitue une maquette du sous-sol, représentative à la fois de sa structure et de son comportement. Généralement, ce type de maquette est représenté sur un ordinateur, et l'on parle alors de modèle numérique. Un modèle de réservoir comporte un maillage ou grille, généralement tridimensionnelle, associée à une ou plusieurs cartes de propriétés pétrophysiques (porosité, perméabilité, saturation...). L'association consiste à attribuer des valeurs de ces propriétés pétrophysiques à chacune des mailles de la grille.

Ces modèles bien connus et largement utilisés dans l'industrie pétrolière, permettent de déterminer de nombreux paramètres techniques relatifs à l'étude ou l'exploitation d'un réservoir, d'hydrocarbures par exemple. En effet, puisque le modèle de réservoir est représentatif de la structure du réservoir et de son comportement, l'ingénieur l'utilise par exemple pour déterminer les zones qui ont le plus de chances de contenir des hydrocarbures, les zones dans lesquelles il peut être intéressant/nécessaire de forer un puits d'injection ou de production pour améliorer la récupération des hydrocarbures, le type d'outils à utiliser, les propriétés des fluides utilisés et récupérés.... Ces interprétations de modèles de réservoir en termes de « paramètres techniques d'exploitation » sont bien connues des spécialistes. De la même façon, la modélisation des sites de stockages de $CO_2$ permet de surveiller ces sites, de détecter des comportements anormaux et de prédire le déplacement du $CO_2$ injecté.

Un modèle de réservoir a donc pour vocation de rendre compte, au mieux, de toutes les informations connues sur un réservoir. Un modèle de réservoir est représentatif lorsqu'une simulation de réservoir pour ce modèle fournit des estimations de données d'historique très proches des données observées. On appelle données d'historique, les données de production issues de mesures aux puits en réponse à la production du réservoir (production d'huile, production d'eau d'un ou plusieurs puits, ratio gaz/huile (GOR), proportion d'eau de production ("water cut"), et/ou les données de sismiques répétitives (impédances sismiques 4D dans une ou plusieurs régions, etc.). Une simulation de réservoir est une technique permettant de simuler les écoulements de fluides au sein d'un réservoir au moyen d'un logiciel appelé simulateur d'écoulement, et du modèle de réservoir.

Pour ce faire, l'intégration de toutes les données disponibles est indispensable. Ces données comprennent en général :

- des mesures en certains points de la formation géologique, par exemple dans des puits. Ces données sont dites statiques car elles sont invariables dans le temps (à l'échelle des temps de la production du réservoir).

- des "données d'historique", comprenant des données de production, par exemple les débits de fluide mesurés aux puits, les concentrations de traceurs et des données issues de campagnes d'acquisition sismique répétées à des temps successifs. Ces données sont dites dynamiques car elles évoluent en cours d'exploitation et sont indirectement liées aux propriétés attribuées aux mailles du modèle de réservoir.

Les techniques d'intégration des données dynamiques (production et/ou sismique 4D) dans un modèle de réservoir sont bien connues des spécialistes : ce sont des techniques dites de "calage d'historique" ("history-matching" en anglais).

Le calage d'historique consiste à modifier les paramètres d'un modèle de réservoir, tels que les perméabilités, les porosités ou les skins de puits (représentant les endommagements autour du puits), les connections de failles... pour minimiser les écarts entre les données d'historique simulées et mesurées. Les paramètres peuvent être liés à des régions géographiques comme les perméabilités ou porosités autour d'un puits ou plusieurs puits. L'écart entre données réelles et données simulées forme une fonctionnelle, dite fonction objectif. Le problème du calage d'historique se résout en minimisant cette fonctionnelle. La fonction objectif est habituellement calculée comme la somme du carré des erreurs entre données simulées et données mesurées. Cette formulation a prouvé son efficacité pour les données de production, dans le sens où elle caractérise correctement l'erreur observée entre les données simulées et mesurées et elle est réduite de façon significative lors du processus d'optimisation. Pour les données sismiques, cette formulation ne convient pas car elle n'est pas représentative de l'écart observé entre deux images d'attributs sismiques. Le processus d'optimisation ne parvient alors pas à la réduire de façon significative.

**Le procédé selon l'invention**

Ainsi, l'objet de l'invention concerne un procédé alternatif pour optimiser l'exploitation d'un milieu souterrain, à partir d'un modèle de réservoir. Le procédé comporte un calage d'historique de ce modèle sur des données dynamiques, en utilisant, pour le calage des données sismiques, une fonction objectif basée sur une mesure de dissimilarités entre une image d'attributs sismiques issue de mesures, et une image d'attributs sismiques issue d'une simulation s'appuyant sur le modèle de réservoir.

A partir d'un modèle de réservoir constitué d'un ensemble de mailles discrétisant le milieu, une valeur d'au moins un paramètre étant affectée à chaque maille, on acquiert en cours d'exploitation du milieu des données de production et des données sismiques. Puis on réalise les étapes suivantes :

- on simule des données de production à partir dudit modèle de réservoir au moyen d'un simulateur découlement ;

- on construit une première image d'au moins un attribut sismique à partir desdites données sismiques ;

- on construit une seconde image dudit attribut sismique à partir dudit modèle de réservoir ;

- on applique une technique de classification pour transformer chaque image d'attribut sismique en une image classifiée contenant au moins deux classes d'attributs sismiques, chaque pixel d'une image classifiée étant associé à un numéro de classe ;

- on construit une carte de dissimilarités locales entre lesdites images classifiées ;

- on modifie lesdites valeurs de paramètre dudit modèle de réservoir de façon à minimiser une différence entre les données de production mesurées et les données de production simulées, et de façon à minimiser lesdites dissimilarités locales ;

- on utilise ledit modèle avec lesdites valeurs de paramètre modifiées pour définir un schéma optimal d'exploitation dudit milieu souterrain ;

- on exploite ledit milieu souterrain selon ledit schéma d'exploitation.

Selon un mode de réalisation, la dissimilarité locale est basée sur une mesure d'une distance de Hausdorff mesurant une distance minimale entre un premier pixel ayant un numéro de classe donné, et un second pixel ayant un numéro de classe différent situé le plus proche dudit premier pixel sur une même image classifiée. Selon ce mode de réalisation, on peut calculer la dissimilarité locale en réalisant les étapes suivantes :

- on définit une portion de ladite première image classifiée où les pixels ont un même numéro de classe NC ;
- on définit une portion de ladite seconde image classifiée où les pixels ont un même numéro de classe égal à NC ;
- pour chaque pixel i de ladite première image classifiée ou de ladite seconde image classifiée :

  • si le pixel i n'appartient à aucune desdites portions, la dissimilarité est nulle,
  • si le pixel i appartient auxdites portions, la dissimilarité est nulle,
  • si le pixel i appartient seulement à l'une desdites portions, la dissimilarité est égale à ladite distance minimale non nulle calculée sur ladite première image classifiée ou sur ladite seconde image classifiée.

Lorsque le nombre de classe est supérieur à deux, on peut construire un ensemble d'images binaires pour chaque image d'attribut sismique, chaque image binaire contenant deux classes, et on définit alors la dissimilarité desdites images classifiées par une somme pondérée de dissimilarités desdites images binaires.

Selon l'invention, la technique de classification peut être une technique de k-means.

Préalablement à l'application de la technique de classification, on peut avantageusement éliminer une partie du bruit contenu dans lesdites images d'attribut sismique au moyen d'un filtrage.

Selon l'invention, on peut mesurer la différence entre les données de production mesurées et les données de production simulées au moyen d'une fonction objectif définie de la façon suivante :

$$OF_{prod} = \frac{1}{2}\left(\sum_{i=1}^{Np} w_i \left(d_i^{prod,sim} - d_i^{prod,mes}\right)^2\right)^{1/2}$$

où $d_i^{prod.sim}$ est la $i_{è}$me donnée de production simulée, Np est le nombre de données de production, $d_i^{prod,mes}$ est la ième donnée de production mesurée, et $w_i$ est un poids.

Selon l'invention, on peut minimiser lesdites dissimilarités locales CDL, au moyen d'une fonction objectif définie de la façon suivante :

$$OF_{sismiq} = \frac{1}{2}\left(\sum_{i=1}^{N} \left(CDL(i)\right)^2\right)^{1/2}$$

où N est le nombre de pixel des images d'attributs sismiques.

Les données de production peuvent comprendre des données de débits de fluide mesurés au niveau de puits traversant ledit milieu et/ou des concentrations de traceurs injectés dans ledit milieu. Enfin, les paramètres peuvent être choisis parmi des propriétés caractéristiques dudit milieu, telles que la porosité et la perméabilité.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

-    La figure 1 illustre le procédé d'exploitation d'un gisement pétrolier selon l'invention

-    La figure 2 montre deux images A et B représentant le sous-sol.

-    La figure 3 illustre le résultat du filtrage de ces images A et B.

-    La figure 4 illustre le résultat de la classification de ces images A et B.

-    La figure 5 représente la carte de dissimilarités locales entre les images A et B.

**Description détaillée du procédé**

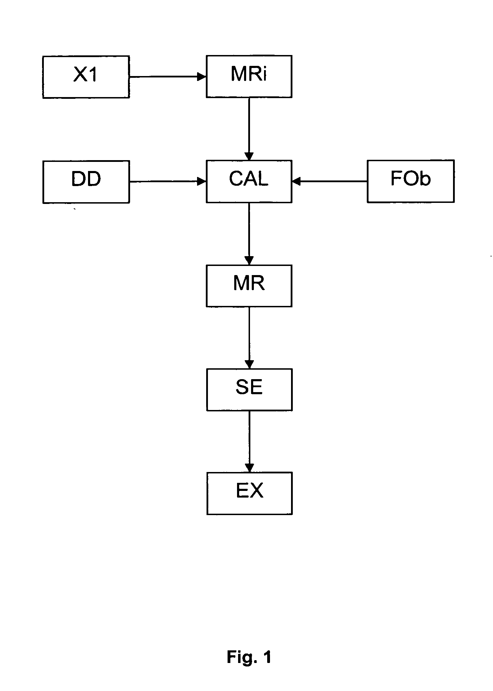

La figure 1 illustre le procédé d'exploitation d'un gisement pétrolier selon l'invention. Le procédé comporte principalement quatre étapes :

1. on génère un modèle de réservoir initial (MRi) à partir d'un ensemble de paramètres (X1 ) issues d'observations et de mesures ;

2. on acquiert des données dynamiques (DD) en cours d'exploitation du gisement, et l'on définit une fonction objectif (OF) pour le calage d'historique. La fonction objectif pour les données de production est une fonction objectif de type moindres carrés. La fonction objectif pour les données de sismiques répétées est calculée selon le processus suivant:

i. Prétraitement (par filtrage et classification) d'mages d'attributs sismiques mesurées et simulées afin d'en extraire les caractéristiques.

ii. Calcul d'une carte des dissimilarités locales entre l'image d'attributs sismiques mesurée et l'image d'attributs sismiques simulée après le prétraitement de l'étape (i).

iii. La fonction objectif pour la carte sismique considérée est calculée à partir de la carte des dissimilarités locales.

3. on réalise un calage (CAL) d'historique en réalisant les étapes suivantes :

    i. on modifie l'ensemble de paramètres (X1 ) puis on modifie modèle de réservoir initial pour obtenir un modèle MR ;

    ii. on réitère à l'étape i), jusqu'à ce que la fonction objectif converge vers un minimum (MIN) ;

4. on exploite (EX) le gisement selon un schéma d'exploitation (SE) adapté au modèle de réservoir.

### 1- Génération d'un modèle initial de réservoir (MRi)

Les formations géologiques sont en général des milieux très hétérogènes. La modélisation d'un réservoir, c'est-à-dire la construction d'un modèle de réservoir représentatif du réservoir, nécessite de recourir à des procédés de construction dits « probabilistes » du fait de la limitation de l'information disponible (nombre de puits restreints, ...). De ce fait, les modèles géologiques construits à partir de ces procédés probabilistes sont appelés « modèles stochastiques ». La construction d'un modèle stochastique de réservoir doit d'abord dépendre de l'environnement du dépôt géologique, ce qui permet de représenter les hétérogénéités majeures qui contrôlent l'écoulement des fluides. L'intégration des données statiques dans ce modèle passe par des opérations linéaires et peut se faire à partir de techniques géostatistiques bien connues des spécialistes.

Un modèle de réservoir, représenté sur un ordinateur, consiste en une grille à N dimensions (N>0 et en général égal à deux ou trois) dont chacune des mailles se voit affecter la valeur d'une propriété caractéristique de la zone étudiée. Il peut s'agir par exemple de la porosité ou de la perméabilité distribuée dans un réservoir. Ces valeurs constituent des cartes. Ainsi un modèle est une grille associée à au moins une carte. Les cartes initiales sont déterminées par un ensemble de paramètres (X1 ). L'un de ces paramètres peut par exemple être la moyenne de la porosité. Dans ce cas, on génère de façon stochastique une carte de porosité de moyenne (X1 ). Une modification de ce paramètre entraine donc une modification du modèle.

A partir de tels modèles, il est possible d'apprécier le mode de fonctionnement de la zone souterraine étudiée. Par exemple, la simulation des écoulements dans un milieu poreux représenté par des modèles stochastiques numériques, permet entre autre, de prédire la production du réservoir et ainsi d'optimiser son exploitation en testant différents scenarios, pour déterminer le scénario le plus efficace.

### 2- Acquisition de données dynamiques (DD)

A ce stade, les données dynamiques n'ont pas été considérées pour construire le modèle de réservoir. On acquiert donc des données dynamiques en cours d'exploitation du gisement. Il s'agit de données de production, d'essais de puits, de temps de percée, de sismique 4D... dont la particularité est de varier au cours du temps en fonction des écoulements de fluide dans le réservoir.

Cette étape est réalisée au moyen d'outils de mesure tels que des débitmètres ou des campagnes sismiques.

Ces données dynamiques vont ensuite être intégrées dans le modèle de réservoir par le biais d'une optimisation (calage d'historique).

### 3- Calage d'historique (CAL)

On modifie la carte (associée au modèle de réservoir) de façon à minimiser une fonction objectif mesurant la différence entre les données dynamiques issues de mesures et les données dynamiques estimées à partir de la représentation du gisement (modèle de réservoir). Cette étape est réalisée au moyen d'un ordinateur.

Pour minimiser les données de production, on utilise un logiciel technique appelé simulateur d'écoulement. Ce logiciel permet de simuler les données de production à partir du modèle de réservoir. Puis on utilise une fonction objectif pour mesurer l'erreur entre données de production mesurées et simulées, notée $OF_{prod}$, On peut utiliser une fonction objectif du type moindres carrés. Elle s'écrit alors :

$$OF_{prod} = \frac{1}{2}\left( \sum_{i=1}^{Np} w_i \left( d_i^{\,prod,sim} - d_i^{\,prod,mes} \right)^2 \right)^{1/2}$$

où $d_i^{\,prod,sim}$ est la ième donnée de production simulée, Np étant le nombre de données de production, $d_i^{\,prod,mes}$ est la ième donnée de production mesurée, et $w_i$ est le poids associé à cette donnée.

Pour minimiser les données sismiques, on construit une première image d'au moins un attribut sismique (l'impédance P par exemple) à partir des données sismiques. Puis on construit une seconde image de cet attribut sismique à partir du modèle de réservoir. Pour réaliser cette simulation, il existe de nombreuses techniques bien connues des spécialistes. Habituellement, la simulation d'écoulement permet d'obtenir des cartes de pression et de saturation. Le modèle pétro-élastique permet ensuite de déterminer les cartes d'attributs sismiques (vitesse, impédances P et S), à partir des propriétés élastiques de la roche et à partir des pressions et saturations. Puis, on construit une carte de dissimilarités locales entre ces images d'attribut sismique. Enfin, on utilise une fonction objectif basée sur cette carte pour mesurer l'erreur entre données sismiques mesurées et simulées, notée $OF_{sismiq}$. Pour simplifier la présentation, on s'intéresse à un seul type d'attribut sismique, les impédances P, notées IP. Ceci signifie que l'on cherche à obtenir une carte d'IP simulée la plus proche possible de la carte d'IP mesurée sur le terrain.

### (i). Prétraitement des images sismiques

Une image d'attributs sismiques est un ensemble de N pixels, chaque pixel prenant la valeur de l'IP au point considéré. Une carte sismique d'IP contient une quantité importante d'information difficilement assimilable par le processus d'optimisation. C'est pourquoi, un prétraitement est utilisé afin d'en extraire les caractéristiques essentielles. Ce sont ces caractéristiques essentielles que l'on cherche à reproduire par la simulation. Ce prétraitement comporte deux étapes, le filtrage et la classification.

### • Le filtrage

Les images d'attributs sismiques sont en général très bruitées. Pour s'affranchir de l'effet du bruit et améliorer la classification, les images d'attributs sismiques sont filtrées par moyenne mobile.

### • La classification

La classification des images d'attributs sismiques consiste à séparer les valeurs d'IP en plusieurs classes. Le nombre de classes peut être égal à 2 ou plus. Dans le cas de 2 classes, la classification revient à transformer une image d'attributs sismiques en couleur en une image d'attributs sismiques en noir et blanc (image binaire). En augmentant le nombre de classes on transforme l'image couleur en une image en niveau de gris. Cette étape est réalisée à l'aide d'un algorithme usuel de classification appelé k-means. On peut en trouver une description dans :

MacKay. David J. C. (September 2003). Information Theory. Inference and Learning Algorithms. Cambridge: Cambridge University Press. ISBN 0-521-64298-1.

Le k-means est un algorithme de partitionnement des données, les classant en k ensembles. Les éléments de chaque ensemble sont aussi proches les uns des autres que possible, et aussi loin que possible des éléments des autres ensembles.

Pour réaliser ce partitionnement, l'algorithme fonctionne de manière itérative. Initialement, les barycentres de chaque ensemble sont fixés de façon aléatoire. L'algorithme attribue ensuite les éléments à l'un ou l'autre des ensembles en fonction de sa proximité avec son barycentre. L'algorithme calcule alors les nouveaux barycentres de chaque ensemble. Les éléments sont ensuite réattribués à l'un ou l'autre des ensembles selon la proximité avec le nouveau barycentre. Ce procédé est répété jusqu'à ce que plus aucun des éléments ne soit réaffecté à un nouvel ensemble.

Il existe de nombreux algorithmes de classification qui peuvent être utilisés par le procédé selon l'invention.

L'image classifiée est donc un ensemble de N pixels prenant des valeurs entières comprises entre 0 et (k-1 ). La suite de la présentation est faite pour le cas k=2, mais est généralisable à un nombre quelconque de classes.

Lorsque le nombre de classe est deux, la classification permet d'obtenir une image binaire. L'image d'attributs sismiques mesurée classifiée est définie par un ensemble de pixels X ayant la valeur 0 ou 1. On choisit d'interpréter la valeur 1 comme étant l'information (le choix inverse est possible et n'a pas de conséquence sur le procédé) et la valeur 0 comme étant le "fond" de l'image. On note A, la portion de l'image mesurée filtrée et classifiée où les pixels sont égaux à 1, soit A définie par $A = \{i \in X \mid X(i) =1\}$, et de même, on note B la portion de l'image simulée filtrée et classifiée où les pixels sont égaux à 1, soit B définie par $B = \{i \in X \mid X(1) = 1\}$. Les ensembles A et B représentent une "forme" dessinée en noir sur un "fond" blanc.

### (ii). Carte des dissimilarités locales

On définit une carte des dissimilarités locales (CDL) entre les images A et B à l'aide d'une mesure locale de la distance de Hausdorff, comme décrite dans

Baudrier, E., Nicolier, F., Millon, G., Ruan, S., Binary-image comparison with local-dissimilarity quantification, Pattern Recognition, Volume 41, Issue 5, 2008, 1461-1478, ISSN 0031-3203, DOI: 10.1016/j.patcog.2007.07.011.

On note CDL(i) la dissimilarité locale mesurée au pixel i. La CDL est mesurée pour chaque pixel de l'ensemble X (chaque maille du modèle est un pixel). La CDL est basée sur une mesure locale de la distance de Hausdorff. Elle est définie de la façon suivante :

$$CDL(i) \;=\; \max(d_H(i,A),\; d_H(i,B)) \; 1_{A\Delta B} \;\; \text{où} \;\; 1_{A\Delta B} = \begin{cases} 1 \, \text{si} \, i \in A\Delta B \\ 0 \, \text{sinon} \end{cases}, \;\; A\Delta B = \big(A\setminus B\big)\cup\big(B\setminus A\big),$$

et $d_H(i, A) = \min_{J\in A}(d(i,j))$ ; $d(i,j)$ étant la distance euclidienne entre les pixels i et j .

Cette définition signifie que pour chaque pixel de l'ensemble X, on regarde si ce pixel appartient aux deux ensembles A et B, à aucun de ces ensembles où à l'un des deux seulement.

- si le pixel n'appartient ni à A ni à B, ceci signifie que ce pixel est blanc (soit la valeur 0) pour les deux images, la CDL est donc nulle.
- si le pixel appartient aux deux ensembles A et B, ceci signifie que ce pixel est noir (soit la valeur 1) pour les deux images, la CDL est également nulle puisque que les deux images en ce pixel sont identiques.
- si le pixel appartient à l'un des deux ensembles seulement, alors on s'intéresse à la distance entre ce pixel et le pixel noir le plus proche. Pour l'une des deux images, ce pixel est noir et par conséquent le pixel le plus proche est lui-même donnant une distance nulle. Pour l'autre image, le pixel est blanc, on calcule la distance au pixel noir le plus proche. La CDL est égale à cette distance.

On somme les dissimilarités locales pour obtenir une erreur globale qu'on intègre ensuite dans la fonction objectif. La somme est donnée sous la forme d'une norme. On peut par exemple, utiliser une norme L1 (somme des valeurs absolues) ou L2 (somme du carrées des erreurs). Dans le cas L2, la fonction objectif pour les données sismiques s'écrit alors :

$$OF_{sismiq} = \frac{1}{2}\left(\sum_{i=1}^{N}\big(CDL(i)\big)^2\right)^{1/2}$$

où N est le nombre de pixel des images sismiques.

**Remarque**

On choisit ici de considérer la valeur 1 comme étant de l'information et la valeur 0 comme étant le fond de l'image. L'attribution à une classe de la valeur 1 et à l'autre de la valeur 0 peut se faire selon différents critères. Le choix est fait une fois pour toute en amont du calage, en fonction de l'image d'attributs sismiques de référence à caler et en fonction de ce qu'on considère comme étant l'information principale dans cette image. Par exemple, dans un cas d'injection de gaz, la bulle de gaz sera l'information. D'un point de vue pratique, le temps de calcul est meilleur en attribuant la valeur 1 à la classe contenant le plus petit nombre d'éléments.

**(iii). Généralisation à un nombre quelconque de classes**

Il existe plusieurs façons de généraliser le procédé à un nombre de classes supérieures. La première solution est de comparer les images classes par classes, et de considérer l'ensemble des autres classes, comme étant non significatives (soit le fond de l'image). L'autre solution est de généraliser la notion de distance entre deux pixels binaires à une distance entre deux pixels définis par un niveau de gris. Une formulation possible est proposée dans

Ilya S. Molchanov and Pedro Terán, Distance transforms for real-valued functions, J. Math Anal. Appl. 278, 2003, 472-484.

Le principe de cette formulation consiste à définir un ensemble d'images binaires à partir de l'image en niveau de gris. Plus précisément, pour chaque seuil de niveau de gris, on définit une image binaire, les pixels blancs étant les pixels avec un niveau de gris inférieur au seuil considéré et les pixels noirs étant les pixels avec un niveau de gris supérieur au seuil. La transformée en distance de l'image en niveaux de gris est alors définie comme une somme pondérée des transformées en distance de toutes les images binaires générées à partir de l'image en niveau de gris.

La fonction objectif, notée OF, s'écrit finalement comme une somme des fonctions objectifs sur les données de production et sur les données sismiques, et s'écrit donc $OF = OF_{Prod} + OF_{sism;iq}$. Il est bien sur possible d'ajouter un coefficient multiplicatif sur chacun de ces termes pour augmenter le poids d'un type de données par rapport à l'autre. Ce coefficient est à déterminer par l'utilisateur en fonction du résultat attendu et du type de calage d'historique réalisé.

La fonction objectif OF est maintenant minimisée à l'aide d'une méthode d'optimisation. La méthode d'optimisation peut par exemple être une méthode de type quasi newton, comme SQPAL, décrite dans le document suivant :

Sinoquet and Delbos, A"dapted Nonlinear Optimization Method for Production Data and 4D seismic Inversion", ECMOR European Conference on the Mathematics of Oil Recovery, 11th, Bergen, Norway, 8-11 september 2008

L'optimiseur détermine une direction de descente, c'est-à-dire qu'il fixe les perturbations à apporter à l'ensemble des paramètres (X1 ) de façon à faire diminuer la fonction objectif, et par conséquent à minimiser la différence entre les données de production mesurées et les données de production simulées, et à minimiser les dissimilarités locales.

## 4- Exploitation du gisement selon un schéma d'exploitation adapté (EX - SE)

A partir d'un tel modèle de réservoir calé avec les données dynamiques, c'est-à-dire à la fois avec les données de production et les données sismiques, les spécialistes peuvent tester différents schémas d'exploitation (emplacement des puits producteur, injecteur,...). Ils utilisent un simulateur d'écoulement pour estimer le volume d'huile récupéré si l'on utilise un schéma donné, et en considérant le modèle de réservoir calé.

En comparant, par exemple, le volume d'huile récupéré, on peut déterminer le schéma de production susceptible de fournir le maximum de récupération.

On exploite alors le gisement selon ce schéma d'exploitation.

## Exemple d'application

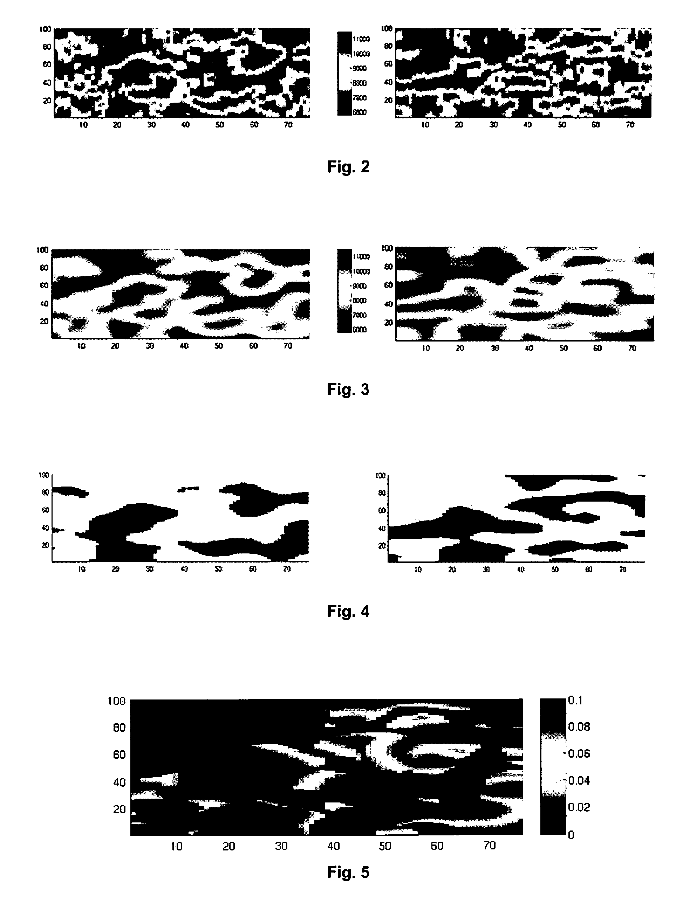

Pour illustrer la méthode, on mesure l'écart entre deux images d'attributs sismiques (en 2D) à l'aide de la formulation proposée. Les images d'attributs sismiques sont deux cartes d'impédances P, représentant le sous-sol, notées A (voir figure 2 à gauche) et B (voir figure 2 à droite). Les images sont d'abord filtrées (voir figure 3, A filtrée à gauche et B filtrée à droite) puis classifiées (voir figure 4, A classifiée à gauche, B classifiée à droite) permettant ainsi le calcul de la cartes des dissimilarités locales entre les images A et B (voir figure 5). Cette carte est finalement sommée pour obtenir le terme à inclure dans la fonction objectif.

## Revendications

1. Procédé pour optimiser l'exploitation d'un milieu souterrain, à partir d'un modèle de réservoir constitué d'un ensemble de mailles discrétisant ledit milieu, une valeur d'au moins un paramètre étant affectée à chaque maille, dans lequel on acquiert en cours d'exploitation dudit milieu des données de production et des données sismiques, **caractérisé en ce que** l'on réalise les étapes suivantes :

   - on simule des données de production à partir dudit modèle de réservoir au moyen d'un simulateur découlement ;
   - on construit une première image d'au moins un attribut sismique à partir desdites données sismiques ;
   - on construit une seconde image dudit attribut sismique à partir dudit modèle de réservoir ;
   - on applique une technique de classification pour transformer chaque image d'attribut sismique en une image classifiée contenant au moins deux classes d'attributs sismiques, chaque pixel d'une image classifiée étant associé à un numéro de classe ;
   - on construit une carte de dissimilarités locales entre lesdites images classifiées ;
   - on modifie lesdites valeurs de paramètre dudit modèle de réservoir de façon à minimiser une différence entre les données de production mesurées et les données de production simulées, et de façon à minimiser lesdites dissimilarités locales ;
   - on utilise ledit modèle avec lesdites valeurs de paramètre modifiées pour définir un schéma optimal d'exploitation dudit milieu souterrain ;
   - on exploite ledit milieu souterrain selon ledit schéma d'exploitation.

2. Procédé selon la revendication 1, dans lequel ladite dissimilarité locale est basée sur une mesure d'une distance de Hausdorff mesurant une distance minimale entre un premier pixel ayant un numéro de classe donné, et un second pixel ayant un numéro de classe différent situé le plus proche dudit premier pixel sur une même image classifiée.

3. Procédé selon la revendication 2, dans lequel on détermine ladite dissimilarité locale en réalisant les étapes suivantes :

- on définit une portion de ladite première image classifiée où les pixels ont un même numéro de classe NC ;
- on définit une portion de ladite seconde image classifiée où les pixels ont un même numéro de classe égal à NC ;
- pour chaque pixel i de ladite première image classifiée ou de ladite seconde image classifiée :

• si le pixel i n'appartient à aucune desdites portions, la dissimilarité est nulle,
• si le pixel i appartient auxdites portions, la dissimilarité est nulle,
• si le pixel i appartient seulement à l'une desdites portions, la dissimilarité est égale à ladite distance minimale non nulle calculée sur ladite première image classifiée ou sur ladite seconde image classifiée.

4. Procédé selon l'une des revendications précédentes, dans lequel le nombre de classe étant supérieur à deux, on construit un ensemble d'images binaires pour chaque image d'attribut sismique, chaque image binaire contenant deux classes, et on définit la dissimilarité desdites images classifiées par une somme pondérée de dissimilarités desdites images binaires.

5. Procédé selon l'une des revendications précédentes, dans lequel la technique de classification est une technique de k-means.

6. Procédé selon l'une des revendications précédentes, dans lequel préalablement à l'application de la technique de classification, on élimine une partie du bruit contenu dans lesdites images d'attribut sismique au moyen d'un filtrage.

7. Procédé selon l'une des revendications précédentes, dans lequel on mesure la différence entre les données de production mesurées et les données de production simulées au moyen d'une fonction objectif définie de la façon suivante :

$$OF_{prod} = \frac{1}{2}\left(\sum_{i=1}^{Np} w_i\left(d_i^{\,prod,sim} - d_i^{\,prod,mes}\right)^2\right)^{\frac{1}{2}}$$

où $d_i^{\,prod,sim}$ est la ième donnée de production simulée, Np est le nombre de données de production, $d_i^{prod,mes}$ est la ième donnée de production mesurée, et $w_i$ est un poids.

8. Procédé selon l'une des revendications précédentes, dans lequel on minimise lesdites dissimilarités locales CDL, au moyen d'une fonction objectif définie de la façon suivante :

$$OF_{sismiq} = \frac{1}{2}\left(\sum_{i=1}^{N}\left(CDL(i)\right)^2\right)^{\frac{1}{2}}$$

où N est le nombre de pixel des images d'attributs sismiques.

9. Procédé selon l'une des revendications précédentes, dans lequel les données de production comprennent des données de débits de fluide mesurés au niveau de puits traversant ledit milieu et/ou des concentrations de traceurs injectés dans ledit milieu.

10. Procédé selon l'une des revendications précédentes, dans lequel les paramètres sont choisis parmi des propriétés caractéristiques dudit milieu, telles que la porosité et la perméabilité.

**Fig. 1**

Fig. 2

Fig. 3

Fig. 4

Fig. 5

**EP 2 447 467 A1**

Europäisches Patentamt
European Patent Office
Office européen des brevets

## RAPPORT DE RECHERCHE EUROPEENNE

Numéro de la demande

EP 11 29 0122

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | GERVAIS V ET AL: "Integration of saturation data in a history matching process based on adaptive local parameterization", JOURNAL OF PETROLEUM SCIENCE AND ENGINEERING, ELSEVIER, AMSTERDAM, NL, vol. 73, no. 1-2, 1 août 2010 (2010-08-01), pages 86-98, XP027170017, ISSN: 0920-4105 [extrait le 2010-05-24] * le document en entier * ----- | 1-10 | INV. E21B43/00 E21B49/00 G01V1/28 |
| Y | MEHRDAD HONARKHAH ET AL: "Stochastic Simulation of Patterns Using Distance-Based Pattern Modeling", MATHEMATICAL GEOSCIENCES, SPRINGER-VERLAG, BERLIN/HEIDELBERG, vol. 42, no. 5, 23 avril 2010 (2010-04-23), pages 487-517, XP019825820, ISSN: 1874-8953 * le document en entier * ----- | 1-10 | |
| Y | Cristian Mihai Maris: "Distance-based Parameterisation and History Matching", TU Delft Master of Science Thesis, 5 octobre 2009 (2009-10-05), pages 1-47, XP055016744, Extrait de l'Internet: URL:http://repository.tudelft.nl/assets/uu id:2cb210c7-4101-4fac-a82d-333fc0b8e0e8/Ms c_thesis_Maris.pdf [extrait le 2012-01-17] * le document en entier * ----- | 2,3 | DOMAINES TECHNIQUES RECHERCHES (IPC) E21B G01V |
| A | EP 2 034 130 A2 (INST FRANCAIS DU PETROLE [FR] IFP ENERGIES NOUVELLES [FR]) 11 mars 2009 (2009-03-11) * abrégé; figure 1 * ----- | 1-10 | |

Le présent rapport a été établi pour toutes les revendications

| Lieu de la recherche | Date d'achèvement de la recherche | Examinateur |
|---|---|---|
| La Haye | 18 janvier 2012 | Dantinne, Patrick |

**ANNEXE AU RAPPORT DE RECHERCHE EUROPEENNE
RELATIF A LA DEMANDE DE BREVET EUROPEEN NO.**

EP 11 29 0122

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-01-2012

| Document brevet cité au rapport de recherche | Date de publication | Membre(s) de la famille de brevet(s) | Date de publication |
|---|---|---|---|
| EP 2034130 A2 | 11-03-2009 | EP 2034130 A2<br>FR 2920816 A1<br>US 2009070086 A1 | 11-03-2009<br>13-03-2009<br>12-03-2009 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MACKAY. DAVID J. C.** Information Theory. Inference and Learning Algorithms. Cambridge University Press, Septembre 2003
- **BAUDRIER, E. ; NICOLIER, F. ; MILLON, G. ; RUAN, S.** Binary-image comparison with local-dissimilarity quantification. *Pattern Recognition,* 2008, vol. 41 (5), ISSN 0031-3203, 1461-1478
- **ILYA S. MOLCHANOV ; PEDRO TERÁN.** Distance transforms for real-valued functions. *J. Math Anal. Appl.,* 2003, vol. 278, 472-484
- **SINOQUET ; DELBOS.** A"dapted Nonlinear Optimization Method for Production Data and 4D seismic Inversion. *ECMOR European Conference on the Mathematics of Oil Recovery,* 08 Septembre 2008